(19) Europäisches Patentamt
European Patent Office
Office européen des brevets

(11) **EP 3 378 913 B1**

(12) **EUROPEAN PATENT SPECIFICATION**

(45) Date of publication and mention
of the grant of the patent:
**07.02.2024 Bulletin 2024/06**

(21) Application number: **18162379.4**

(22) Date of filing: **16.03.2018**

(51) International Patent Classification (IPC):
**C09J 7/24** *(2018.01)* **C09J 7/29** *(2018.01)*
**G09F 3/10** *(2006.01)*

(52) Cooperative Patent Classification (CPC):
(C-Sets available)
**C09J 7/24; C09J 7/29;** C09J 2203/334;
C09J 2301/302; C09J 2301/414; C09J 2400/163;
C09J 2423/046; C09J 2429/006; C09J 2453/00;
C09J 2467/006 (Cont.)

(54) **USE OF AN INDICATION LABEL, AND METHOD OF MANUFACTURING THE SAME**

VERWENDUNG VON ANZEIGEETIKETTEN UND VERFAHREN ZU IHRER HERSTELLUNG

UTILISATION D'ÉTIQUETTES DE SIGNALISATION ET LEUR PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2017 JP 2017057836**

(43) Date of publication of application:
**26.09.2018 Bulletin 2018/39**

(73) Proprietor: **LINTEC Corporation
Tokyo 173-0001 (JP)**

(72) Inventors:
• **MIYAZAKI, Kentaro
Itabashi-ku, Tokyo 173-0001 (JP)**
• **TAYA, Naoki
Itabashi-ku, Tokyo 173-0001 (JP)**

(74) Representative: **J A Kemp LLP
80 Turnmill Street
London EC1M 5QU (GB)**

(56) References cited:
**EP-A1- 1 780 252 EP-A1- 2 913 372
EP-A1- 3 330 082 WO-A1-2018/019631**

• **Anonymous: "Physical Properties Table", , 1
January 2022 (2022-01-01), pages 622-627,
XP055958136, Retrieved from the Internet:
URL:https://static.thermoscientific.com/im
ages/D20826~.pdf [retrieved on 2022-09-06]**
• **XIANDA YU ET AL: "Water-vapor permeability of
polyvinyl alcohol films", DESALINATION., vol. 62,
1 January 1987 (1987-01-01), pages 293-297,
XP055958125, NL ISSN: 0011-9164, DOI:
10.1016/0011-9164(87)87030-3**

EP 3 378 913 B1

(52) Cooperative Patent Classification (CPC): (Cont.)

C-Sets
C09J 2423/046, C09J 2429/006

**Description**

[Technical Field]

The present invention relates to the use of an indication label comprising a pressure sensitive adhesive sheet for pharmaceutical products or foods, and a method of manufacturing the pressure sensitive adhesive sheet.

[Background Art]

In recent years, containers for storing pharmaceutical products and foods have been changed from conventional glass containers to resin containers such as polyethylene, polypropylene and polyethylene terephthalate containers. In such resin containers, however, properties of blocking transmission of gases such as water vapor and oxygen (which may be referred to as "gas barrier properties," hereinafter) tend to be small as compared with glass containers.

A pressure sensitive adhesive sheet provided with a pressure sensitive adhesive layer may be attached as an indication label to the surface of a resin container as the above. In this case, volatile organic compounds (VOC) may diffuse from the pressure sensitive adhesive layer to contaminate the resin container as an adherend of the pressure sensitive adhesive sheet and/or pharmaceutical products, foods, etc. stored in the resin container. In a pressure sensitive adhesive sheet used for specific products, such as pharmaceutical products and foods, which are strongly demanded to avoid contamination, therefore, it is required to reduce the amount of diffusion of volatile organic compounds from the pressure sensitive adhesive layer as much as possible.

For example, Patent Literature 1 discloses a pressure sensitive adhesive tape used as an indication label for foods. In this pressure sensitive adhesive tape, the amount of diffusion of total volatile organic compounds is 1.0 μg or less as an n-decane equivalent per 1 cm$^2$ of the surface of the pressure sensitive adhesive layer.

[Prior Art Literature]

[Patent Literature]

[Patent Literature 1] JP2016-141724A

EP 2 913 372 A1 discloses an adhesive sheet for sealing electronic devices comprising a substrate layer and a gas barrier layer including metals like aluminum, magnesium, zinc and tin; and a pressure-sensitive adhesive layer laminated on a surface of the barrier layer. The pressure-sensitive adhesive layer is made of a styrene-based block copolymer.

EP1 780 252 A1 discloses a pressure-sensitive adhesive sheet for tires comprising a base material bearing a metal layer; and a pressure-sensitive adhesive layer on the metal layer comprising a styrene-based block copolymers as used in the present application. A print layer is present on the surface of the base layer opposite to the pressure-sensitive adhesive layer.

[Summary of the Invention]

[Problems to be solved by the Invention]

The surface of the above pressure sensitive adhesive sheet opposite to the pressure sensitive adhesive layer may be laminated thereon with a printing layer that is formed with characters, figures, images, etc. using ink. In many cases, the ink may contain low-molecular-weight components, and the printing layer may maintain some residues of low-molecular-weight unreacted binder components (such as oligomers, monomers, and resin components) that were not used when forming the printed layer, a photoinitiator and decomposition products thereof, a diluting solvent, etc. When the pressure sensitive adhesive sheet provided with the printing layer is attached to an adherend such as a container of a product, therefore, low-molecular-weight components derived from the printing layer as the above may possibly permeate the indication label materials and migrate to the adherend from the printing layer to contaminate the adherend.

In recent years, flexographic printing, which is one type of printing schemes, has been increasingly carried out, and ultraviolet curable ink (UV ink) has been brought to the mainstream of the ink used for flexographic printing. In flexographic printing, however, a large amount of binder components having a lower molecular weight is added so that the viscosity of the ink is lowered as compared with the case of ordinary offset printing and the like. When the previously-described printing layer is provided by flexographic printing, therefore, contamination of the adherend due to migration of the binder components may be more seriously problematic.

Unfortunately, with the conventional pressure sensitive adhesive sheet and indication label, these problems of contamination of adherends were not able to be sufficiently suppressed.

The present invention has been made in consideration of such actual circumstances as the above and an object of the present invention is to provide the use of an indication label comprising a pressure sensitive adhesive sheet for pharmaceutical products or foods, with which the contamination of an adherend can be suppressed. Another object of the present invention is to provide a method of manufacturing the pressure sensitive adhesive sheet for an indication label.

[Means for solving the Problems]

To achieve the above objects, first, the present invention provides the use of an indication label for pharmaceutical products or foods, wherein the indication label comprises:

(i) a pressure sensitive adhesive sheet comprising:

a barrier base material having gas barrier properties to water vapor and oxygen;
a pressure sensitive adhesive layer laminated on a surface of the barrier base material;
a a print-receiving layer provided on a surface of the barrier base material opposite to the pressure sensitive adhesive layer, and

(ii) a printing layer laminated on a surface of the pressure sensitive adhesive sheet opposite to the pressure sensitive adhesive layer;

wherein

the pressure sensitive adhesive layer comprises an extruded product of a pressure sensitive adhesive composition that contains a thermoplastic elastomer;
when the barrier base material has a thickness of 50 $\mu$m, the barrier base material has a water vapor transmission rate of 15 g$\cdot$m$^2\cdot$day$^{-1}$ or less, measured as described herein;
when the barrier base material has a thickness of 50 $\mu$m, the barrier base material has an oxygen transmission rate of 10 cc$\cdot$m$^{-2}\cdot$day$^{-1}\cdot$atm$^{-1}$ or less, measured as described herein.

Further, in the use of an indication label according to the above, when a printing layer is provided on the surface of the barrier base material opposite to the pressure sensitive adhesive layer, the above barrier base material is located between the printing layer and an adherend and can suppress migration of components derived from the printing layer to the adherend. Moreover, the pressure sensitive adhesive layer is an extruded product of the pressure sensitive adhesive composition which contains a thermoplastic elastomer, and diffusion of volatile organic compounds from the pressure sensitive adhesive layer can thereby be suppressed. As a result of the above, when the pressure sensitive adhesive sheet for an indication label is used, contamination of the adherend can be suppressed.

The barrier base material comprises one or more base materials and one or more barrier layers laminated on a surface of the base materials. A material which constitutes the one or more base materials is a resin-based material. A material which constitutes the one or more barrier layers is selected from one or more of aluminum, magnesium, zinc and tin(Invention 1).

In the above invention (Invention 1), at least one of the barrier layers may preferably be located closer to the pressure sensitive adhesive layer than all of the base materials of the barrier base material (Invention 2).

In the above invention (Invention 1 or 2), the thermoplastic elastomer may preferably be at least one selected from an acrylic-based elastomer, an olefin-based elastomer, and a styrene-based elastomer (Invention 3).

In the above invention (Invention 1 to 3), the content of the thermoplastic elastomer in the pressure sensitive adhesive composition may preferably be 50 mass% or more and 100 mass% or less (Invention 4).

Second, the present invention provides a method of manufacturing a pressure sensitive adhesive sheet for an indication label as defined above in any of Inventions 1 to 4, the method comprising a step of extruding the pressure sensitive adhesive composition to form the pressure sensitive adhesive layer (Invention 5).

[Advantageous Effect of the Invention]

When an indication label is used according to the present invention, contamination of an adherend can be suppressed. Moreover, according to the manufacturing method of the present invention, such a pressure sensitive adhesive sheet for an indication label can be manufactured.

[Brief Description of Drawings]

FIG. 1 is a cross-sectional view of a pressure sensitive adhesive sheet for an indication label.
FIG. 2 is a cross-sectional view of a pressure sensitive adhesive sheet for an indication label.
FIG. 3 is a cross-sectional view of an indication label.

[Embodiments for Carrying out the Invention]

Hereinafter, one or more embodiments of the present invention will be described.

<Pressure Sensitive Adhesive Sheet for Indication Label>

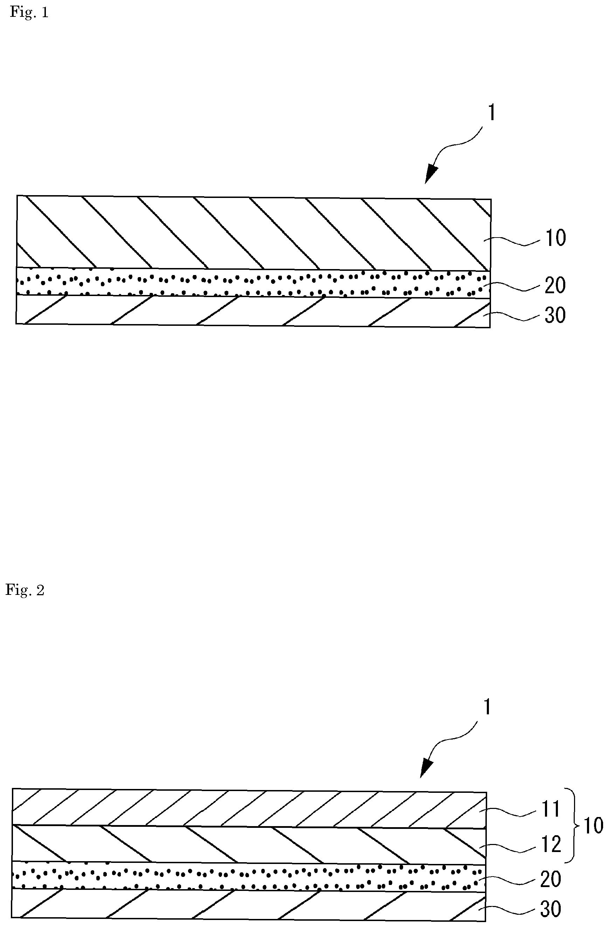

FIG. 1 illustrates a cross-sectional view of a pressure sensitive adhesive sheet 1 for an indication label (which may be simply referred to as a "pressure sensitive adhesive sheet 1," hereinafter). The pressure sensitive adhesive sheet 1 may comprise a barrier base material 10 that has gas barrier properties to water vapor and oxygen, a pressure sensitive adhesive layer 20 that is laminated on a surface of the barrier base material 10, and a release sheet 30 that is laminated on the surface of the pressure sensitive adhesive layer 20 opposite to the barrier base material 10 (this surface may be referred to as a "pressure sensitive adhesive surface," hereinafter). The release sheet 30 may be a sheet that is optionally laminated for the purpose of protecting the pressure sensitive adhesive surface of the pressure sensitive adhesive layer 20 until the pressure sensitive adhesive surface is attached to an adherend. The release sheet 30 may thus be omitted from the pressure sensitive adhesive sheet 1.

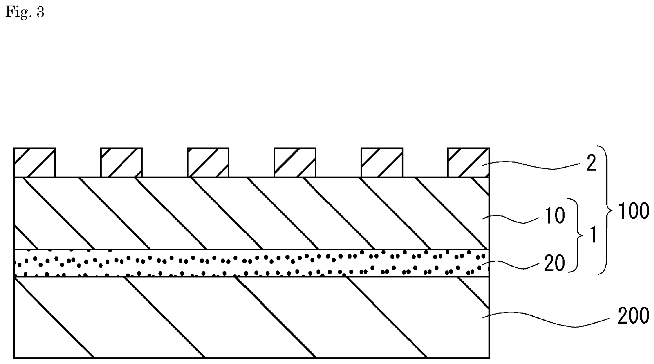

As illustrated in FIG. 3, a printing layer 2 may be laminated on the surface opposite to the pressure sensitive adhesive surface of the pressure sensitive adhesive sheet 1, and an indication label 100 that comprises the pressure sensitive adhesive sheet 1 and the printing layer 2 can thereby be obtained. The indication label 100 can be used in a state of being attached to an adherend 200. During this use, the barrier base material 10 is located between the printing layer 2 and the adherend 200 and suppresses migration of the components derived from the printing layer 2 to the adherend 200.

In the pressure sensitive adhesive sheet 1, the pressure sensitive adhesive layer 20 is an extruded product of the pressure sensitive adhesive composition which contains a thermoplastic elastomer. That is, the pressure sensitive adhesive layer 20 is an extruded product formed by an extrusion molding method. In general, existing methods for forming a pressure sensitive adhesive layer also include a method in which one surface of a process sheet is coated with a coating liquid that contains a pressure sensitive adhesive composition and a solvent and the formed coating film is dried to form the pressure sensitive adhesive layer (this method may be referred to as a "coating method," hereinafter). However, fortunately, the extrusion molding method does not require the use of a solvent for diluting the pressure sensitive adhesive composition, unlike the coating method. In the pressure sensitive adhesive sheet 1, therefore, such a solvent does not remain in the pressure sensitive adhesive layer 20 and can be prevented from diffusing as a volatile organic compound from the pressure sensitive adhesive layer 20.

As the above, according to the pressure sensitive adhesive sheet 1, the barrier base material 10 can suppress migration of the components derived from the printing layer 2 to the adherend 200, and diffusion of volatile organic compounds from the pressure sensitive adhesive layer 20 can be suppressed thereby to avoid contamination of the adherend 200.

1. Configuration of Pressure Sensitive Adhesive Sheet for Indication Label

(1) Barrier Base Material

The configuration of the barrier base material 10 is not particularly limited, provided that the barrier base material 10 has gas barrier properties to water vapor and oxygen. The configuration of the barrier base material 10, is such that the barrier base material 10 comprises at least one base material 11 and at least one barrier layer 12 laminated on a surface of the base material 11. This configuration is illustrated in Fig. 2. This configuration may be referred to as "the barrier base material configuration" hereinafter.

According to the above barrier base material configuration, the barrier base material 10 is composed of a combination of the base material 11 and the barrier layer 12 and can therefore be formed by combining various materials in accordance with the application. The pressure sensitive adhesive sheet 1 can thus be easily manufactured not only with the performance of suppressing contamination but also with other desired performance.

In the above barrier base material configuration, the base material 11 and the barrier layer 12 may each be a single layer or a multilayer. When at least one of the base material 11 and the barrier layer 12 is a multilayer, any layer configuration may be employed. For example, one base material 11, a barrier layer 12, and another base material 11 may be laminated in this order, or a base material 11, one barrier layer 12, and another barrier layer 12 may also be laminated in this order.

In the pressure sensitive adhesive sheet 1 according to the barrier base material configuration, any position is possible as the position of the barrier layer 12 in the barrier base material 10, but as illustrated in FIG. 2, at least one barrier layer 12 may preferably be located closer to the pressure sensitive adhesive layer 20 than all of the base materials 11 of the barrier base material 10. In other words, at least one barrier layer 12 may preferably exist between the pressure sensitive adhesive layer 20 and a base material 11 closest to the pressure sensitive adhesive layer 20. As will be described later, the base material 11 and the barrier layer 12 may also be laminated on each other via an adhesive layer. Here, components contained in the adhesive layer may migrate to the adherend 200 to which the pressure sensitive adhesive sheet 1 is attached. In general, the thickness of an adhesive layer can be made very thin, and such migration of the components can be suppressed as much as possible, but at least one barrier layer 12 is located closer to the pressure sensitive adhesive layer 20 than any base material 11 and can thereby block the components derived from the adhesive layer. As a result, contamination of the adherend 200 can be effectively suppressed.

Each layer that constitutes the barrier base material 10 will be described below.

(1-1) Base Material

In the pressure sensitive adhesive sheet 1, the configuration of the base material 11 is not particularly limited, provided that the barrier layer 12 can be laminated on the base material 11, but a material which constitutes the base material 11 is a resin film of which the primary material is a resin-based material. Specific examples of the base material 11 include films of polyester, such as polyethylene terephthalate, polybutylene terephthalate and polyethylene naphthalate, films of polyolefin, such as polyethylene and polypropylene, cellophane, a diacetyl cellulose film, triacetyl cellulose film, acetyl cellulose butyrate film, polyvinyl chloride film, polyvinylidene chloride film, polyvinyl alcohol film, ethylene-vinyl acetate copolymer film, polystyrene film, polycarbonate film, polymethylpentene film, polysulfone film, polyether ether ketone film, polyether sulfone film, polyetherimide film, polyimide film, fluorine resin film, polyamide film, acrylic resin film, norbornene-based resin film, cycloolefin resin film, polyphenylene sulfide film, and liquid-crystal polymer film. Modified films such as crosslinked films and ionomer films may also be used. The base material 11 may be a laminated film in which a plurality of the above-described films is laminated. In this laminated film, materials that constitute each layer may be the same type or different types. Among the above, at least one of the polyester film and the polyolefin film may preferably be contained in the base material 11. In particular, the base material 11 may be preferably a polyester film and particularly preferably a polyethylene terephthalate film from the viewpoints of a small coefficient of thermal expansion and excellent dimensional stability in the use of the pressure sensitive adhesive sheet 1 as the indication label 100.

The base material 11 may be a film having heat shrinkability. In this case, the pressure sensitive adhesive sheet 1 has heat shrinkability, and the indication label 100 obtained using the pressure sensitive adhesive sheet 1 can be heated to shrink so as to correspond to the shape of the adherend 200. Commonly-used films as shrink films can be used as the film having heat shrinkability which constitutes the base material 11. Preferred examples of the shrink film include those obtained by monoaxially or biaxially stretching a film of which the material is at least one of a polyester-based resin, polystyrene-based resin, polyolefin-based resin, polyvinyl chloride-based resin, etc.

The thickness of the base material 11 may be preferably 10 $\mu$m or more and particularly preferably 20 $\mu$m or more. From another aspect, the thickness of the base material 11 may be preferably 80 $\mu$m or less and particularly preferably 50 $\mu$m or less.

(1-2) Barrier Layer

In the pressure sensitive adhesive sheet 1 according to the barrier base material configuration, the configuration of the barrier layer 12 is not particularly limited, provided that the barrier layer 12 has desired gas barrier properties to water vapor and oxygen and can suppress migration of the components derived from the printing layer 2 to the adherend 200.

The material which constitutes the barrier layer 12 is a metal selected from aluminum, magnesium, zinc and tin. The barrier layer 12 may preferably be metal foil of which the material is the metal, or a layer obtained by vapor deposition of the metal on one surface of the base material 11. One type of these materials can be used alone, or two or more types can also be used in combination.

The method of forming the barrier layer 12 is not particularly limited. Examples of the method include a method of extruding the above-described material of the barrier layer 12 onto the base material 11 to form the barrier layer 12 on the base material 11, a method that include coating the base material 11 with a solution in which the above-described material is dissolved in an organic solvent and moderately drying the obtained coating film to form the barrier layer 12, a method of forming the above-described material on the base material, such as by a vapor deposition method, sputtering method, ion plating method, thermal CVD method, and plasma CVD method, and a method of attaching a preliminarily-formed barrier layer 12 and the base material 11 to each other. The coating method is also not particularly limited. Examples of the coating method include known coating methods such as a spin-coating method, spray-coating method, bar-coating method, knife-coating method, roll-coating method, blade-coating method, die-coating method, and gravure-coating method.

In the pressure sensitive adhesive sheet 1 according to the barrier base material configuration, the base material 11 may be composed of a material other than the film having heat shrinkability. In such aspects, the barrier layer 12 may preferably be aluminum foil or a layer obtained by vapor deposition of aluminum. The barrier layer 12 which contains such materials has excellent gas barrier properties to water vapor and oxygen and can effectively suppress migration of the components derived from the printing layer 2 to the adherend 200 in the use of the pressure sensitive adhesive sheet 1 as the indication label 100.

In the pressure sensitive adhesive sheet 1 according to the barrier base material configuration, the thickness of the barrier layer 12 may be preferably 1 nm or more, particularly preferably 5 nm or more, and further preferably 10 nm or more. From another aspect, the thickness of the barrier layer 12 may be preferably 50 um or less, particularly preferably 40 um or less, and further preferably 30 um or less. When the thickness of the barrier layer 12 is 1 nm or more, the pressure sensitive adhesive sheet 1 can effectively exhibit excellent barrier properties. When the thickness of the barrier layer 12 is 50 um or less, the thickness of the pressure sensitive adhesive sheet 1 can be controlled so as not to be unduly thick, and the pressure sensitive adhesive sheet 1 can have excellent handling properties.

(1-3) Adhesive Layer

The pressure sensitive adhesive sheet 1 according to the barrier base material configuration may be provided with an adhesive layer between the base material 11 and the barrier layer 12. By providing the pressure sensitive adhesive sheet 1 with such an adhesive layer, the base material 11 and the barrier layer 12 can adhere to each other, and the occurrence of delamination and displacement between these layers can be effectively suppressed.

The material which constitutes the adhesive layer is not particularly limited, provided that the material enables adhesion between the base material 11 and the barrier layer 12, but may preferably be less likely to cause contamination of the adherend 200 in the use of the pressure sensitive adhesive sheet 1 as the indication label 100. Examples to be used as the material include a solvent-type adhesive, water-based adhesive, emulsion-type adhesive, solventless-type adhesive, rewetting-type adhesive, polycondensation-type adhesive, a light curing-type resin, and thermoset resin.

Among the above materials, polyester-based adhesives, polyurethane-based adhesives, imine-based adhesives, acrylic-based adhesives and the like may be preferred, and polyester-based adhesives may be particularly preferred. From the viewpoints of stability of adhesion strength and water resistance, polyurethane-based adhesives may be preferred. The polyurethane-based adhesives are thermoset adhesives, and one-pack adhesives or two-pack adhesives may be used. Specific schemes include a scheme of compounding polyisocyanate and polyol such as polyether and polyester for curing, a scheme of using a prepolymer, a scheme of compounding polyisocyanate and an adhesive such as a rubber-type, vinyl-type and acrylic-type adhesives.

The method of forming the adhesive layer is not particularly limited. For example, the adhesive layer can be formed through preparing a coating liquid that contains a material of the adhesive layer and, if desired, further contains a solvent or a dispersion medium, coating one surface of the base material 11 with the coating liquid using a known coating method to form a coating film, and drying the coating film.

The thickness of the adhesive layer may be preferably 0.5 um or more and particularly preferably 1 um or more. From another aspect, the thickness may be preferably 10 um or less and particularly preferably 5 um or less.

(1-4)

(1-5) Physical Properties, etc.

In the pressure sensitive adhesive sheet 1, the water vapor transmission rate of the barrier base material 10 when the thickness of the barrier base material 10 is 50 $\mu$m is 15 $g \cdot m^2 \cdot day^{-1}$ or less, particularly preferably 13 $g \cdot m^{-2} \cdot day^{-1}$ or less, and further preferably 10 $g \cdot m^{-2} \cdot day^{-1}$ or less. As the water vapor transmission rate of the barrier base material 10 is within the above range, migration of the components derived from the printing layer 2 can be effectively suppressed in the indication label 100 in which, as illustrated in FIG. 3, the printing layer 2 is laminated on the surface opposite to the pressure sensitive adhesive surface of the pressure sensitive adhesive sheet 1 according to the present embodiment. As used in the present description, the water vapor transmission rate is defined as a mass of water that passes through a region of 1 $m^2$ of a measurement object having a predetermined thickness for one day ($g \cdot m^{-2} \cdot day^{-1}$).

Details of a method of measuring the above water vapor transmission rate are as described in the exemplary test, which will be described later.

In the pressure sensitive adhesive sheet 1, the oxygen transmission rate of the barrier base material 10 when the thickness of the barrier base material 10 is 50 $\mu$m is 10 cc·m$^{-2}$·day$^{-1}$·atm$^{-1}$ or less, particularly preferably 5 cc·m$^{-2}$·day$^{-1}$·atm$^{-1}$ or less, and further preferably 3 cc.m$^{-2}$·day$^{-1}$·atm$^{-1}$ or less. As the oxygen transmission rate of the barrier base material 10 is within the above range, migration of the components derived from the printing layer 2 can be effectively suppressed in the indication label 100 in which, as illustrated in FIG. 3, the printing layer 2 is laminated on the surface opposite to the pressure sensitive adhesive surface of the pressure sensitive adhesive sheet 1 according to the present embodiment. As used in the present description, the oxygen transmission rate is defined as a volume of oxygen that passes through a region of 1 m$^2$ of a measurement object having a predetermined thickness for one day (cc·m$^{-2}$·day$^{-1}$·atm$^{-1}$) when the measurement object is in contact with oxygen of 1 atm. The above oxygen transmission rate is measured in accordance with ISO14663-2, and details of the method of measuring are as described in the exemplary test, which will be described later.

(2) Pressure Sensitive Adhesive Layer

In the pressure sensitive adhesive sheet 1, the pressure sensitive adhesive layer 20 is an extruded product of the pressure sensitive adhesive composition which contains a thermoplastic elastomer. As previously described, the extrusion molding method for obtaining an extruded product does not require the use of a solvent for diluting the pressure sensitive adhesive composition and, therefore, such a solvent does not remain in the pressure sensitive adhesive layer 20 formed. Thus, migration of the solvent from the pressure sensitive adhesive layer 20 to the adherend 200 does not take place. This can suppress contamination of the adherend 200 when the pressure sensitive adhesive sheet 1 according to the present embodiment is used as the indication label 100. In particular, the pressure sensitive adhesive sheet 1 is used as the indication label 100 for pharmaceutical products and foods, which are strongly demanded to avoid contamination.

In the pressure sensitive adhesive sheet 1, the content of the thermoplastic elastomer in the pressure sensitive adhesive composition may be preferably 50 mass% or more, particularly preferably 60 mass% or more, and further preferably 70 mass% or more. When the content is 50 mass% or more, the content of the low-molecular-weight component in the pressure sensitive adhesive layer 20 can be further reduced, and the pressure sensitive adhesive sheet 1 may be further avoided from contaminating an adherend. The upper limit of the above content is not particularly limited and may be 100 mass% or less.

Any resin can be employed as the above thermoplastic elastomer, provided that the resin has pressure sensitive adhesive property, but the thermoplastic elastomer may preferably be one selected from, for example, an acrylic-based elastomer, olefin-based elastomer, and styrene-based elastomer. These may each be used alone, or two or more types may also be used in combination.

Preferred examples of the above styrene-based elastomer include a styrene-butadiene copolymer or a hydrogenated product thereof and a styrene-based block copolymer or a hydrogenated product thereof. Specific examples of the styrene-butadiene copolymer or hydrogenated product thereof include a hydrogenated styrene-butadiene rubber (HSBR) (such as product names "Dynaron 1320P," "Dynaron 1321P," and "Dynalon 2324P" available from JSR Corporation). Specific examples of the styrene-based block copolymer or hydrogenated product thereof include styrene-ethylene/butylene copolymer-styrene copolymer (SEBS) (such as product names "Dynalon 8601P" and "Dynaron 9901P" available from JSR Corporation).

Examples of the above styrene-based block copolymer include styrene-based ABA-type block copolymers (triblock copolymers) such as styrene-butadiene-styrene copolymer (SBS) and styrene-isoprene-styrene copolymer (SIS); styrene-based ABAB-type block copolymers (tetrablock copolymers) such as styrene-butadiene-styrene-butadiene copolymer (SBSB) and styrene-isoprene-styrene-isoprene copolymer (SISI); styrene-based ABABA-type block copolymers (pentablock copolymers) such as styrene-butadiene-styrene-butadiene-styrene copolymer (SBSBS) and styrene-isoprene-styrene-isoprene-styrene copolymer (SISIS); styrene-based AB-type block copolymers such as styrene-butadiene copolymer (SB), styrene-isoprene copolymer (SI), copolymer of styrene-ethylene/butylene copolymer (SEB) and copolymer of styrene-ethylene/propylene copolymer (SEP); styrene-based random copolymers such as styrene-butadiene rubber (SBR); A-B-C-type styrene-olefin crystalline block polymer such as copolymer of styrene-ethylene/butylene copolymer-olefin crystal (SEBC); and hydrogenated products thereof.

Examples of the above hydrogenated product of the styrene-based block copolymer include styrene-ethylene/butylene copolymer-styrene copolymer (SEBS), styrene-ethylene/propylene copolymer-styrene copolymer (SEPS), and copolymer of styrene-ethylene/butylene copolymer-styrene-ethylene/butylene copolymer (SEBSEB).

Only one type of the styrene-based elastomer may be used, or two or more types may also be used.

Preferred examples of the above olefin-based elastomer include an amorphous or low-crystalline polyolefin-based elastomer.

Examples of such polyolefin-based elastomers include ethylene propylene rubber, ethylene-α-olefin copolymer, and amorphous or low-crystalline polypropylene-based resin (such as atactic polypropylene). Only one type of the olefin-based elastomer may be used, or two or more types may also be used.

Examples of the above α-olefin include 1-butene, 1-pentene, 1-hexene, 1-heptene, 1-octene, 4-methyl-1-pentene, and 4-methyl-1-hexene.

Preferred examples of the above acrylic-based elastomer include acrylic-based block copolymers.

The block structure of the above acrylic-based block copolymer is not particularly limited, but the acrylic-based block copolymer may preferably have a structure in which a relatively soft segment [block segment (B)] and a relatively hard and pseudo-crosslinkable segment [block segment (A)] are linked to each other. Specifically, the acrylic-based block copolymer may preferably have at least one block structure of (A-B)n-type, (A-B)n-A-type, and B-(A-B)n-type (where A and B represent the above respective block segments and n represents an integer of 1 to 10). The above acrylic-based block copolymer may preferably have a block structure represented by (A-B)n-type or (A-B)n-A-type among the above and particularly preferably have a block structure represented by (A-B)n-A-type. This can effectively suppress migration of the components from the pressure sensitive adhesive layer 20 to the adherend 200 while the pressure sensitive adhesive layer 20 exhibits good pressure sensitive adhesive property, and the processing suitability for extrusion molding can also be improved. Only one type of the acrylic-based block copolymer may be used, or two or more types may also be used.

Examples of the monomer which constitutes the above block segment (A) include methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate, benzyl methacrylate, methoxyethyl methacrylate, ethoxyethyl methacrylate, diethylaminoethyl methacrylate, 2-hydroxyethyl methacrylate, 2-aminoethyl methacrylate, glycidyl methacrylate, and tetrahydrofurfuryl methacrylate. These may each be used alone, or two or more types may also be used in combination. From the viewpoint of improving the transparency, heat resistance, and durability of the pressure sensitive adhesive layer 20 to be obtained, the monomer which constitutes the above block segment (A) may be more preferably methyl methacrylate, ethyl methacrylate, tert-butyl methacrylate, cyclohexyl methacrylate, isobornyl methacrylate, or phenyl methacrylate among the above, and further preferably methyl methacrylate. The glass-transition temperature (Tg) of the above block segment (A) may be preferably 90°C or higher, particularly preferably 95°C or higher, and further preferably 100°C or higher. From another aspect, the glass-transition temperature (Tg) may be preferably 130°C or lower and particularly preferably 120°C or lower. When the glass-transition temperature (Tg) of the block segment (A) is within the above range, it is possible to control the heat resistance and durability of the pressure sensitive adhesive layer 20 and the processing suitability for extrusion molding within respective optimum ranges.

Examples of the monomer which constitutes the above block segment (B) include n-butyl acrylate, isobutyl acrylate, sec-butyl acrylate, tert-butyl acrylate, amyl acrylate, isoamyl acrylate, n-hexyl acrylate, cyclohexyl acrylate, phenyl acrylate, methoxyethyl acrylate, ethoxyethyl acrylate, diethylaminoethyl acrylate, 2-hydroxyethyl acrylate, 2-aminoethyl acrylate, glycidyl acrylate, tetrahydrofurfuryl acrylate, 2-ethylhexyl acrylate, n-octyl acrylate, isooctyl acrylate, decyl acrylate, isobornyl acrylate, lauryl acrylate, benzyl acrylate, and phenoxyethyl acrylate. These may each be used alone, or two or more types may also be used in combination. From the viewpoint of improving the flexibility and pressure sensitive adhesive characteristics of the pressure sensitive adhesive composition to be obtained, the monomer which constitutes the above block segment (b) may be more preferably an acrylic ester such as n-butyl acrylate, isobutyl acrylate, and n-hexyl acrylate among the above, and further preferably n-butyl acrylate. These may each be used alone, or two or more types may also be used in combination. The glass-transition temperature (Tg) of the above block segment (B) may be preferably -40°C or higher and particularly preferably -10°C or higher. From another aspect, the glass-transition temperature (Tg) may be preferably 50°C or lower. When the glass-transition temperature (Tg) of the block segment (B) is within the above range, the adhesive strength of the pressure sensitive adhesive layer 20 can be controlled in an optimum range.

The above acrylic-based block copolymer may contain other monomers as necessary. When other monomers are contained, the amount may be preferably 40 mass% or less, more preferably 20 mass% or less, and further preferably 10 mass% or less to the total mass of the monomers used in each polymer block.

The cohesive strength of the entire block copolymer can be controlled by adjusting the type, length, quantitative balance, etc. of each segment. From the viewpoint of imparting pressure sensitive adhesive characteristics, the mass ratio of segments in the acrylic-based triblock copolymer represented by (A-B)n-A-type (block segment (A)/block segment (B)) may be preferably 5/95 to 70/30 in an embodiment or 10/90 to 50/50 in another embodiment, and more preferably 15/85 to 30/70.

Specific examples of the acrylic-based triblock copolymer represented by (A-B)n-A-type include polymethyl methacrylate (PMMA)-polybutyl acrylate (PBA)-polymethyl methacrylate (PMMA) and polymethyl methacrylate (PMMA)-poly2-ethylhexyl acrylate (2EHA)-polymethylmethacrylate (PMMA).

When the temperature is close to a room temperature, the pseudo-crosslinkable segment located at the terminal of the above acrylic-based triblock copolymer interacts with a pseudo-crosslinkable segment of other polymers to form a three-dimensional collective structure as a whole, while when the temperature is high, the pseudo-crosslinking unlinks and the viscosity decreases. Accordingly, when the pressure sensitive adhesive composition for forming the pressure sensitive adhesive layer 20 contains an acrylic-based triblock copolymer represented by (A-B)n-A-type, the pressure sensitive adhesive composition maintains good flowability during the extrusion molding while, in a state after the molding, the pressure sensitive adhesive layer 20 can be obtained which has excellent physical properties (such as adhesive strength, holding power, storage elastic modulus, and tensile strength) due to the three-dimensional collective structure.

The polystyrene-equivalent weight-average molecular weight (Mw) of the above thermoplastic elastomer may be preferably 50,000 or more and 1,000,000 or less. This allows the pressure sensitive adhesive layer 20, which is formed from the pressure sensitive adhesive composition containing such a thermoplastic elastomer, to have both the adhesion property to the adherend 200 and the high cohesive strength of the pressure sensitive adhesive layer 20. The pressure sensitive adhesive sheet 1 according to the present embodiment provided with such a pressure sensitive adhesive layer 20 can therefore have better attaching property to the adherend 200. From the viewpoint of stably enhancing the adhesion property of the pressure sensitive adhesive sheet 1 to the adherend 200 and the cohesive strength of the pressure sensitive adhesive layer 20, the above polystyrene-equivalent weight-average molecular weight (Mw) may be particularly preferably 55,000 or more and further preferably 60,000 or more. From the same viewpoint, the above polystyrene-equivalent weight-average molecular weight (Mw) may be particularly preferably 500,000 or less and further preferably 400,000 or less.

In the present description, the value of the polystyrene-equivalent weight-average molecular weight (Mw) refers to a value measured as a standard polystyrene-equivalent value by the gel permeation chromatography (GPC) using a solvent of tetrahydrofuran (THF). Specifically, the measurement is to be performed using a GPC measurement apparatus ("HLC-8220GPC" available from TOSOH CORPORATION) under the following condition:

Columns: TSKgelGMHXL → TSKgelGMHXL → TSKge12000HXL
Injection amount: 80 $\mu$l
Measurement temperature: 40°C
Flow rate: 1 ml/min
Detector: differential refractometer
Sample concentration: 1% (w/v).

The molecular weight distribution (Mw/Mn) of the above thermoplastic elastomer may be preferably 3.0 or less. This can reduce the amount of low-molecular-weight components contained in the thermoplastic elastomer and effectively suppress the diffusion of volatile organic compounds due to such low-molecular-weight components from the pressure sensitive adhesive layer 20 to the adherend 200. The above molecular weight distribution (Mw/Mn) may be particularly preferably 2.5 or less and further preferably 2.0 or less.

The above thermoplastic elastomer may preferably satisfy both the conditions that the polystyrene-equivalent weight-average molecular weight (Mw) is 50,000 or more and 1,000,000 or less and that the molecular weight distribution (Mw / Mn) is 3.0 or less. It is possible to effectively suppress migration of the components from the pressure sensitive adhesive layer 20 to the adherend 200.

The above pressure sensitive adhesive composition may further contain components other than the previously-described thermoplastic elastomer. Examples of such components include a non-crosslinkable resin, crosslinkable resin, tackifier, coupling agent, filler, softener, plasticizer, surfactant, antioxidant, thermal stabilizer, light stabilizer, UV absorber, colorant, antifoam, flame retardant, and antistatic. In particular, the above pressure sensitive adhesive composition may preferably contain a tackifier, and it may be preferred to use, for example, at least one of polyterpene resin and rosin ester as the above tackifier.

The thickness of the pressure sensitive adhesive layer 20 may be preferably 5 um or more, particularly preferably 10 um or more, and further preferably 15 um or more. From another aspect, the thickness may be preferably 100 um or less, particularly preferably 80 um or less, and further preferably 70 um or less. When the thickness of the pressure sensitive adhesive layer 20 is 5 um or more, the pressure sensitive adhesive sheet 1 can readily exhibit excellent attaching property to the adherend 200. When the thickness of the pressure sensitive adhesive layer 20 is 100 um or less, migration of the components from the pressure sensitive adhesive layer 20 to the adherend 200 can be more reduced, and contamination of the adherend 200 can be effectively suppressed during the use of the pressure sensitive adhesive sheet 1 as the indication label 100.

(3) Print-receiving Layer

In the pressure sensitive adhesive sheet 1, a print-receiving layer is provided on the surface of the barrier base material 10 opposite to the pressure sensitive adhesive layer 20. By providing the print-receiving layer, when the printing layer 2 is provided on the surface of the pressure sensitive adhesive sheet 1 at the print-receiving layer side as illustrated in FIG. 3, the interfacial adhesion between the pressure sensitive adhesive sheet 1 and the printing layer 2 can be excellent.

The material which constitutes the print-receiving layer is not particularly limited, provided that the print-receiving layer can exhibit certain interfacial adhesion with the printing layer 2. Examples of such materials include a polyester urethane resin, acrylic resin, urethane resin, acrylic urethane resin, styrene resin, polyester resin, polyvinyl alcohol, starch, and casein. If necessary, these materials may be compounded with fillers such as clay, aluminum hydroxide, calcium carbonate, and titanium oxide and/or isocyanate-based or epoxy-based crosslinker.

The method of forming the print-receiving layer is not particularly limited. For example, the print-receiving layer can be formed through preparing a coating liquid that contains a material of the print-receiving layer and, if desired, further contains a solvent or dispersion medium, coating one surface of the barrier base material 10 with the coating liquid to form a coating film, and drying the coating film.

The thickness of the print-receiving layer may be, for example, preferably 0.01 um or more and particularly preferably 0.05 um or more. From another aspect, the thickness may be preferably 50 um or less and particularly preferably 30 um or less.

(4) Release Sheet

In the pressure sensitive adhesive sheet 1 according to the present embodiment, for the purpose of protecting the pressure sensitive adhesive surface of the pressure sensitive adhesive sheet 1 until the pressure sensitive adhesive surface is attached to the adherend 200, the release sheet 30 may be laminated on the pressure sensitive adhesive surface. The configuration of the release sheet 30 may be freely determined. Examples of the release sheet 30 include those in which release treatment is performed for a plastic film, such as using a release agent. Specific examples of the plastic film include films of polyester, such as polyethylene terephthalate, polybutylene terephthalate and polyethylene naphthalate, and films of polyolefin, such as polypropylene and polyethylene. Examples to be used as the release agent include silicone-based, fluorine-based, and long-chain alkyl-based release agents, among which the silicone-based release agent may be preferred because stable performance can be obtained at low cost. The thickness of the release sheet 30 is not particularly restricted, but may ordinarily be 20 um or more and 250 um or less.

(5) Others

In the pressure sensitive adhesive sheet 1, the surface to be provided with the printing layer 2 may be subjected to surface treatment for improving the wettability. Examples of such surface treatment include corona treatment, plasma treatment, flame irradiation, electron-beam irradiation, and ultraviolet irradiation, among which the corona treatment may be preferably performed. This can suppress the occurrence of displacement and delamination between the pressure sensitive adhesive sheet 1 and the printing layer 2.

In the pressure sensitive adhesive sheet 1, when the print-receiving layer is provided, it may be preferred to perform the above surface treatment for the surface of the barrier base material 10 to be provided with the print-receiving layer and then provide the print-receiving layer on the treated surface. This can enhance the interfacial adhesion between the barrier base material 10 and the print-receiving layer and suppress the occurrence of displacement and delamination between the layers.

2. Physical Properties of Pressure Sensitive Adhesive Sheet for Indication Label

In the pressure sensitive adhesive sheet 1, when the printing layer 2 is laminated on the surface opposite to the pressure sensitive adhesive layer 20 of the pressure sensitive adhesive sheet 1 to obtain the indication label 100 and the indication label 100 is attached to a predetermined adherend 200, migration of the components derived from the printing layer 2 (and the print-receiving layer if present) to the adherend 200 may preferably be 10 mg/100 $cm^2$ or less as measured by an OML test with a detection limit of 0.5 mg/100 $cm^2$ in accordance with the EC Regulation and more preferably less than the detection limit.

In the pressure sensitive adhesive sheet 1, when the printing layer 2 is laminated on the surface opposite to the pressure sensitive adhesive layer 20 of the pressure sensitive adhesive sheet 1 to obtain the indication label 100 and the indication label 100 is attached to a predetermined adherend 200, migration of the components derived from the pressure sensitive adhesive layer 20 to the adherend 200 may preferably be 10 mg/100 $cm^2$ or less as measured by an OML test with a detection limit of 0.5 mg/100 $cm^2$ in accordance with the EC Regulation and more preferably less than the detection limit.

As previously described, when the indication label 100 is constituted using the pressure sensitive adhesive sheet 1 and attached to the adherend 200, existence of the barrier base material 10 between the printing layer 2 and the adherend 200 can suppress migration of the components derived from the printing layer 2 to the adherend and can also suppress diffusion of volatile organic compounds from the pressure sensitive adhesive layer 20, and migration of the components from the printing layer 2 and/or from the pressure sensitive adhesive layer 20 to the adherend 200 can thereby be suppressed, as described above, which results in the suppression of contamination of the adherend 200. Details of the above-described OML test are as described in the exemplary test, which will be described later.

In the pressure sensitive adhesive sheet 1, the water vapor transmission rate of the pressure sensitive adhesive sheet 1 when the thickness of the pressure sensitive adhesive sheet 1 is 50 $\mu$m is 15 $g \cdot m^2 \cdot day^{-1}$ or less, particularly preferably 13 $g \cdot m^2 \cdot day^{-1}$ or less, and further preferably 10 $g \cdot m^2 \cdot day^{-1}$ or less. The pressure sensitive adhesive sheet 1 is provided with the barrier base material 10 and can thereby achieve a low water vapor transmission rate as described above. When the pressure sensitive adhesive sheet 1 is provided with the release sheet 30, the release sheet 30 is removed from the pressure sensitive adhesive sheet 1, and the above water vapor transmission rate is measured for a laminate that does not includes the release sheet 30. The lower limit of the above water vapor transmission rate is not particularly limited, but may preferably be $1 \times 10^{-4}$ $g \cdot m^2 \cdot day^{-1}$ or more.

The above-described water vapor transmission rate of the pressure sensitive adhesive sheet 1 when the thickness of the pressure sensitive adhesive sheet 1 is 50 $\mu$m can be obtained through measuring a water vapor transmission rate ($g \cdot m^{-2} \cdot day^{-1}$) of the pressure sensitive adhesive sheet 1 having a predetermined thickness (when the release sheet 30is provided, it is excluded) under a condition of temperature of 40°C and relative humidity of 90% using a transmission rate tester (available from Lyssy AG, product name "L80-5000") and applying the following equation (2) to the obtained water vapor transmission rate (actual measurement value) to calculate a water vapor transmission rate (50 $\mu$m equivalent) ($g \cdot m^{-2} \cdot day^{-1}$).

$$\text{Water vapor transmission rate (50 μm equivalent)} = \text{Water vapor transmission rate (actual measurement value)} \times (\text{thickness of pressure sensitive adhesive sheet}/50) \quad \text{...(2)}$$

In the pressure sensitive adhesive sheet 1, the oxygen transmission rate of the pressure sensitive adhesive sheet 1 when the thickness of the pressure sensitive adhesive sheet 1 is 50 $\mu$m is 10 $cc \cdot m^{-2} \cdot day^{1} \cdot atm^{-1}$ or less, particularly preferably 5 $cc \cdot m^{-2} \cdot day^{-1} \cdot atm^{-1}$ or less, and further preferably 3 $cc \cdot m^{-2} \cdot day^{-1} \cdot atm^{-1}$ or less. The pressure sensitive adhesive sheet 1 is provided with the barrier base material 10 and can thereby achieve a low oxygen transmission rate as described above. When the pressure sensitive adhesive sheet 1 is provided with the release sheet 30, the release sheet 30 is removed from the pressure sensitive adhesive sheet 1, and the above oxygen transmission rate is measured for a laminate that does not includes the release sheet 30. The lower limit of the above oxygen transmission rate is not particularly limited, but may preferably be $1 \times 10^{-3}$ $g \cdot m^{-2} \cdot day^{1} \cdot atm^{-1}$ or more.

The above-described oxygen transmission rate of the pressure sensitive adhesive sheet 1 when the thickness of the pressure sensitive adhesive sheet 1 is 50 $\mu$m is to be measured in accordance with ISO14663-2. Specifically, the oxygen transmission rate can be obtained through measuring an oxygen transmission rate ($cc \cdot m^{-2} \cdot day^{-1} \cdot atm^{-1}$) of the pressure sensitive adhesive sheet 1 having a predetermined thickness (when the release sheet 30 is provided, it is excluded) under a condition of temperature of 20°C and relative humidity of 65% using a transmission rate tester and applying the following equation (3) to the obtained oxygen transmission rate (actual measurement value) to calculate an oxygen transmission rate (50 $\mu$m equivalent) ($cc \cdot m^{-2} \cdot day^{-1} \cdot atm^{-1}$).

$$\text{Oxygen transmission rate (50 μm equivalent)} = \text{Oxygen transmission rate (actual measurement value)} \times (\text{thickness of pressure sensitive adhesive sheet}/50) \quad \text{...(3)}$$

In the pressure sensitive adhesive sheet 1, the 180° peeling adhesive strength to a SUS plate (SUS304 #600) measured for the pressure sensitive adhesive surface in accordance with JIS Z0237: 2009 (ISO 29862-29864: 2007) may be preferably 0.1 N/25 mm or more, particularly preferably 1.0 N/25 mm or more, and further preferably 3.0 N/25 mm or more. When the 180° peeling adhesive strength is within the above range, the pressure sensitive adhesive sheet 1 can be more excellent in the attaching property to an adherend. The upper limit of 180° peeling adhesive strength is not particularly limited, but may be preferably 200 N/25 mm or less in general and particularly preferably 100 N/25 mm or less. Details of the above-described adhesive strength are as described in the exemplary test, which will be described later.

3. Method of Manufacturing Pressure Sensitive Adhesive Sheet for Indication Label

The method of manufacturing the pressure sensitive adhesive sheet 1 includes a step of extruding the previously-described pressure sensitive adhesive composition to form the pressure sensitive adhesive layer 20. In this case, the previously-described pressure sensitive adhesive composition may be extruded onto one surface of the barrier base material 10 to form the pressure sensitive adhesive layer 20. In an alternative embodiment, the previously-described pressure sensitive adhesive composition may be extruded onto the release-treated surface of the release sheet 30 (this surface may be referred to as a "release surface," hereinafter), and the barrier base material 10 may then be laminated on the surface of the pressure sensitive adhesive layer 20 opposite to the release sheet 30. In an alternative embodiment, the pressure sensitive adhesive layer 20 and the barrier base material 10 may be laminated on each other by coextrusion molding.

A specific example of the extrusion molding method for the pressure sensitive adhesive layer 20 may preferably include melting and kneading each of the pressure sensitive adhesive composition and the material of the barrier base material 10 using a T-die film-forming machine or the like and performing melt coextrusion molding to form the pressure sensitive adhesive layer 20 in a state of being integrated with the barrier base material 10. Another method may include melting and kneading the pressure sensitive adhesive composition using a T-die film-forming machine or the like and performing extrusion lamination of the molten pressure sensitive adhesive composition on one surface of the above barrier base material 10 while moving the above barrier base material 10 at a constant speed. Another method may include melting and kneading the pressure sensitive adhesive composition using a T-die film-forming machine or the like and performing extrusion lamination of the molten pressure sensitive adhesive composition between one surface of the above barrier base material 10 and the release surface of the release sheet 30 while moving the above barrier base material 10 at a constant speed. In this case, the pressure sensitive adhesive sheet 1 can be manufactured with the release sheet 30 laminated on the pressure sensitive adhesive surface of the pressure sensitive adhesive layer 20.

4. Indication Label

The indication label 100 comprises the pressure sensitive adhesive sheet 1 according to the present embodiment and the printing layer 2 laminated on the surface opposite to the pressure sensitive adhesive layer 20 of the pressure sensitive adhesive sheet 1. Here, as previously described, the pressure sensitive adhesive sheet 1 is provided with the barrier base material 10 and can thereby exhibit excellent gas barrier properties to water vapor and oxygen. When the indication label 100 according to the present embodiment is used for the adherend 200, therefore, the pressure sensitive adhesive sheet 1 exists between the printing layer 2 and the adherend 200 and can thereby suppress migration of the components derived from the printing layer 2 to the adherend 200. Moreover, the pressure sensitive adhesive layer 20 is composed of an extruded product of the pressure sensitive adhesive composition which contains a thermoplastic elastomer, and diffusion of volatile organic compounds from the pressure sensitive adhesive layer 20 can also be suppressed. As a result of the above, according to the indication label 100 of the present embodiment, contamination of the adherend 200 can be suppressed.

The indication label 100 according is suitable as an indication label for products that are strongly demanded to avoid contamination due to the indication label 100 itself. Thus, the indication label 100 is used for pharmaceutical products or foods. It may be preferred to use the indication label 100 according to the present embodiment as an indication label to be attached to a resin container for pharmaceutical products or foods.

The material of the printing layer 2 is not particularly limited, and a commonly-used ink for printing can be used. Examples of the ink include an ultraviolet curable ink, solvent-type ink, gravure ink, and water-based ink. According to the indication label 100 of the present embodiment, even when an ink that contains a large amount of a low-molecular-weight component or a large amount of a solvent, such as an ultraviolet curable ink, is used as the ink for forming the printing layer 2, the migration of the ink to the adherend 200 can be well suppressed.

The method of forming the printing layer 2 is not particularly limited, and a known printing method can be used. Examples of the method include those in which various printers are used to render images, such as a gravure printing method, flexographic printing method, offset printing method, screen printing method, letter pressing method, relief printing method, planographic printing, seal printing, ink-jet method, electrophotographic printing method, on-demand printing method, thermal transfer scheme, and melt-type thermal transfer method.

The thickness of the printing layer 2 may be preferably, for example, 0.5 um or more and particularly preferably 1 um or more. From another aspect, the thickness may be preferably 60 um or less and particularly preferably 50 um or less.

In the indication label 100 according to the present embodiment, a coating layer may be provided to protect the surface at the printing layer 2 side. Examples of the material of the coating layer include those containing organic binders, inorganic binders, etc. and, if desired, further containing surface-roughening agents. Examples of the organic binders include an acrylic-based resin, styrene-based resin, crosslinked polyester urethane-based resin, polyester-based resin, polyurethane-based resin, polyol-based resin, polyvinyl alcohol, polyvinyl pyrrolidone, cellulose derivatives, acetate derivatives, polyvinyl chloride-based resin, polyimide-based resin, latex resin, starch, gelatin, vegetable protein, casein, gum arabic, and albumin. Examples of the inorganic binders include a silica sol, alumina sol, zirconia sol, and titania sol. Specific examples of the surface-roughening agents include inorganic powder such as silica, zirconia, clay, talc, kaolin, diatomaceous earth, alumina, titania, zeolite, calcium carbonate, barium sulfate, aluminum hydroxide, magnesium hydroxide, calcium phosphate, and glass; and organic powder such as an acrylic-based resin, urethane resin, vinyl chloride resin, benzoguanamine resin, benzoguanamine/melamine/formaldehyde condensate, ion exchange resin, urea resin, and polystyrene-based resin.

It should be appreciated that the embodiments heretofore explained are described to facilitate understanding of the present invention and are not described to limit the present invention. It is therefore intended that the elements disclosed in the above embodiments include all design changes and equivalents to fall within the technical scope of the present invention.

For example, in addition to the previously-described layers, one or more other layers may be laminated in the pressure sensitive adhesive sheet 1.

[Examples]

Hereinafter, the present invention will be described further specifically with reference to examples, etc., but the scope of the present invention is not limited to these examples, etc.

<Example 1>

A barrier base material was prepared. The barrier base material is a film in which aluminum foil as a barrier layer and a polyethylene terephthalate film as a base material are attached to each other via an adhesive layer (available from ASIA ALUMINUM CO., LTD., product name "ALPET (registered trademark)," thickness of polyethylene terephthalate film: 25 um, thickness of aluminum foil: 7 um) .

Then, a pressure sensitive adhesive composition was obtained through adding 10 mass parts of a polyterpene resin (available from YASUHARA CHEMICAL CO., LTD., product name "YS Resin PX1150") as a tackifier to 90 mass parts of a pellet-like styrene-based elastomer ("Quintac 3421" available from Zeon Corporation, styrene-isoprene-styrene copolymer (SIS), listed as "Styrene-based elastomer" in Table 1) and kneading them. This pressure sensitive adhesive composition was put into an extruder and extruded and laminated on the surface of the above barrier base material at the barrier layer side using a T-die to form a pressure sensitive adhesive layer having a thickness of 20 um. Thereafter, the surface of the pressure sensitive adhesive layer opposite to the barrier base material and the release surface of a release sheet (available from LINTEC Corporation, product name "SP-PET381031") were attached to each other to obtain a pressure sensitive adhesive sheet for an indication label in which the barrier base material, the pressure sensitive adhesive layer, and the release sheet were laminated in this order.

Next, the surface of the obtained pressure sensitive adhesive sheet for an indication label at the barrier base material side was coated with an acrylate-based ultraviolet curable resin by a gravure-coating method, and the acrylate-based ultraviolet curable resin was then irradiated with ultraviolet rays at irradiation energy of 300 mW/cm$^2$ for five seconds using a high-pressure UV lamp to form a colorless and transparent print-receiving layer having a film thickness of 1 um. The pressure sensitive adhesive sheet for an indication label was thus obtained in which the print-receiving layer, the barrier base material, the pressure sensitive adhesive layer, and the release sheet were laminated in this order.

Subsequently, ultraviolet curable ink (available from T&K TOKA CO., LTD., product name "BEST CURE UV161 Black S") was printed on the surface of the obtained pressure sensitive adhesive sheet for an indication label at the print-receiving layer side using a flexographic printer. Then, the above printed ultraviolet curable ink was irradiated with ultraviolet rays and cured to form a printing layer having a thickness of 5 um. An indication label was thus obtained.

<Example 2>

An indication label was obtained in the same manner as in Example 1 except that a different barrier base material was used. The barrier base material is a film (available from TORAY ADVANCED FILM Co., Ltd., product name "Metalmy S," thickness: 25 um) in which aluminum was vapor-deposited as a barrier layer on one surface of a polyethylene terephthalate film as a base material.

<Reference Example 3>

One surface of an ethylene-vinyl alcohol-based copolymer film (available from KURARAY CO., LTD., product name "EVAL EF-XL12," biaxial stretching type, thickness: 12 $\mu$m, content of ethylene monomer in total monomer constituting ethylene-vinyl alcohol-based copolymer: 32 mol%, content of vinyl alcohol monomer: 68 mol%) as a barrier layer was coated with a polyester-based adhesive (Tg: 60°C), and the obtained coating film was dried at 100° for one minute in an oven to form an adhesive layer having a thickness of 3 um. A polyethylene terephthalate film (available from Toray Industries, Inc., product name "Lumirror T60," thickness: 25 um) as a base material was attached to the surface of the adhesive layer opposite to the barrier layer to obtain a barrier base material. An indication label was obtained in the same manner as in Example 1 except that this barrier base material was used.

<Example 4>

An indication label was obtained in the same manner as in Example 1 except that a printing layer having a thickness of 5 um was formed by performing gravure printing of a gravure ink on the surface of the pressure sensitive adhesive sheet for an indication label at the print-receiving layer side.

<Example 5>

An indication label was obtained in the same manner as in Example 1 except that a pellet-like acrylic-based block copolymer (polymethyl methacrylate (PMMA)-polybutyl acrylate (PBA)-PMMA, listed as "Acrylic-based elastomer" in Table 1) was used as the pressure sensitive adhesive composition.

<Example 6>

An indication label was obtained in the same manner as in Example 1 except that a pellet-like ethylene-$\alpha$-olefin copolymer (ethylene-hexene copolymer, hexene content ratio: 5 mol%, listed as "Olefinic-based elastomer" in Table 1) was used.

<Comparative Example 1>

An indication label was obtained in the same manner as in Example 1 except that a pressure sensitive adhesive layer was formed through coating the surface of a barrier base material at the barrier layer side with an acrylic-based pressure sensitive adhesive (available from LINTEC Corporation, product name "PL Thin," listed as "PL Thin" in Table 1) using a coater so that the thickness after drying would be 20 um and drying it at 120°C for one minute.

<Comparative Example 2>

An indication label was obtained in the same manner as in Example 1 except that a pressure sensitive adhesive layer was formed through coating the surface of a barrier base material at the barrier layer side with an acrylic-based pressure sensitive adhesive (available from LINTEC Corporation, product name "PL Thin") using a coater so that the thickness after drying would be 20 um and drying it at 120°C for one minute and a printing layer having a thickness of 5 um was formed by performing gravure printing of a gravure ink on the surface of the pressure sensitive adhesive sheet for an indication label at the print-receiving layer side.

<Comparative Example 3>

An indication label was obtained in the same manner as in Example 1 except that a polyethylene terephthalate film (available from Toray Industries, Inc., product name "Lumirror T60," thickness: 25 um) was used as substitute for the barrier base material.

<Comparative Example 4>

An indication label was obtained in the same manner as in Example 1 except that a biaxially-stretched polypropylene film (available from Oji F-Tex Co., Ltd., product name "ALPHAN PP40SD-202," thickness: 40 um) was used as substitute for the barrier base material.

<Comparative Example 5>

An indication label was obtained in the same manner as in Example 1 except that a polyethylene terephthalate film (available from Toray Industries, Inc., product name "Lumirror T60," thickness: 25 um) was used as substitute for the barrier base material and a pressure sensitive adhesive layer was formed through coating a surface of the polyethylene terephthalate film with an acrylic-based pressure sensitive adhesive (available from LINTEC Corporation, product name "PL Thin") using a coater so that the thickness after drying would be 20 um and drying it at 120°C for one minute.

<Comparative Example 6>

An indication label was obtained in the same manner as in Example 1 except that a biaxially-stretched polypropylene film (available from Oji F-Tex Co., Ltd., product name "ALPHAN PP40SD-202," thickness: 40 um) was used as substitute for the barrier base material and a pressure sensitive adhesive layer was formed through coating a surface of the biaxially-stretched polypropylene film with an acrylic-based pressure sensitive adhesive (available from LINTEC Corporation, product name "PL Thin") using a coater so that the thickness after drying would be 20 um and drying it at 120°C for one minute.

<Exemplary Test 1> (Measurement of Water Vapor Transmission Rate)

For the barrier base materials used in the examples and comparative examples and films used in the comparative examples as substitute for barrier base materials (such a film may be referred to as a "substitute film," hereinafter), the water vapor transmission rate ($g \cdot m^{-2} \cdot day^{-1}$) was measured under a condition of temperature of 40°C and relative humidity of 90% using a water vapor transmission rate tester (available from Lyssy AG, product name "L80-5000"). The obtained water vapor transmission rate (actual measurement value) was used to calculate a water vapor transmission rate ($g \cdot m^{-2} \cdot day^{-1}$) when the thickness of the barrier base material or substitute film was 50 $\mu$m (i.e. 50 $\mu$m equivalent) from the following equation (4). Results are listed in Table 1.

$$\text{Water vapor transmission rate (50 } \mu\text{m equivalent)} = \text{Water vapor transmission rate (actual measurement value)} \times (\text{thickness of barrier base material or substitute film}/50) \quad \ldots (4)$$

<Exemplary Test 2> (Measurement of Oxygen Transmission Rate)

For the barrier base materials produced in the examples and comparative examples and the substitute films used in the comparative examples, the oxygen transmission rate ($ccm \cdot m^{-2} \cdot day^{-1} \cdot atm^{-1}$) was measured in accordance with ISO14663-2 under a condition of temperature of 20°C and relative humidity of 65% using an oxygen transmission rate tester. The obtained oxygen transmission rate (actual measurement value) was used to calculate an oxygen trans-mission rate ($cc \cdot m^{-2} \cdot day^{-1} \cdot atm^{-1}$) when the thickness of the barrier base material or substitute film was 50 $\mu$m (i.e. 50 $\mu$m equivalent) from the following equation (5). Results are listed in Table 1.

$$\text{Oxygen transmission rate (50 } \mu\text{m equivalent)} = \text{Oxygen transmission rate (actual measurement value)} \times (\text{thickness of barrier base material or substitute film}/50) \quad \ldots (5)$$

<Exemplary Test 3> (Measurement of Amount of Migrated Components)

For indication labels produced in the examples and comparative examples, test was conducted in accordance with "the basic rules necessary for testing migration of the constituents of plastic materials and articles intended to come into contact with foodstuffs" (Directive 82/711/EEC, 97/48/EC). The amount of migrated components ($mg/100 \text{ cm}^2$) was measured by an OML test with a detection limit of 0.5 $mg/100 \text{ cm}^2$. Specifically, the release sheet was removed from the pressure sensitive adhesive sheet for an indication label produced in each of the examples and comparative examples, and a test sample was obtained through attaching the pressure sensitive adhesive sheet for an indication label to a frame-shaped jig and exposing a predetermined size of the surface of the pressure sensitive adhesive layer. Subsequently, the test sample was stationarily placed at 20°C for 24 hours so that the exposed surface of the pressure sensitive adhesive layer of the pressure sensitive adhesive sheet for an indication label was in contact with 150 ml of an extraction solvent (water:ethanol=90:10). Thereafter, only the extraction solution was dried at 20°C, and drying operation was further performed at 120°C for 30 minutes. The weight of residue after drying (unit: $mg/100 \text{ cm}^2$) was measured, and the measured value was employed as the amount of migrated components derived from the pressure sensitive adhesive layer. Results are listed in Table 1. When the measurement result was less than the detection limit, the result is listed as "N.D."

In addition, the release sheet was removed from the indication label produced in each of the examples and comparative examples, and a test sample was obtained through attaching the indication label to a frame-shaped jig and exposing a predetermined size of the surface of the pressure sensitive adhesive layer. Subsequently, after the contact with the extraction solvent and the drying operation were performed for the exposed surface of the pressure sensitive adhesive layer of the indication label as in the above, the weight of residue after drying (unit: mg/100 cm$^2$) was measured, and the measured value was employed as the amount of migrated components from the indication label. Then, the "amount of migrated components derived from the pressure sensitive adhesive layer" obtained as described above was subtracted from the "amount of migrated components from the indication label," and the obtained value was employed as the amount of migrated components derived from the printing layer and the print-receiving layer. Results are listed in Table 1. When the measurement result was less than the detection limit, the result is listed as "N.D."

<Exemplary Test 4> (Measurement of Adhesive Strength)

The pressure sensitive adhesive sheet produced in each of the examples and comparative examples was cut into a shape of 25 mm×150 mm to obtain a test piece, and the release sheet was removed from the obtained test piece to expose the pressure sensitive adhesive surface, which was attached to an adherend (SUS304 #600) under an environment of 23°C and a relative humidity of 50%. After 24 hours passed from the attachment, the test piece was peeled off from the adherend by a 180° peeling method in accordance with JIS Z 0237: 2009 (ISO 29862-29864: 2007) at a tensile speed of 300 mm/min using a tensile tester ("Tensilon" available from ORIENTEC CORPORATION), and the 180° peeling adhesive strength (N/25 mm) was measured. Results are listed in Table 1 (note that in this table, "Example 3" is a Reference example).

[Table 1]

| | Ink constituting printing layer | Configuration of barrier base material (or its substitute) | Material used for formation of pressure sensitive adhesive layer | Water vapor transmission rate $(g \cdot m^{-2} \cdot day^{-1})$ | Oxygen transmission rate $(cc \cdot m^{-2} \cdot day^{-1} \cdot atm^{-1})$ | Amount of migrated components $(mg/100cm^2)$ | | Adhesive strength (N/25mm) |
|---|---|---|---|---|---|---|---|---|
| | | | | | | Derived from printing layer and print-receiving layer | Derived from pressure sensitive adhesive layer | |
| Example 1 | UV ink | Aluminum foil/Adhesive layer/Base material | Styrene-based elastomer | < 0.03 | < 0.05 | N.D. | 1.1 | 14.8 |
| Example 2 | UV ink | Aluminum vapor deposition/Base material | Styrene-based elastomer | 3.1 | 2.5 | N.D. | 1.1 | 14.8 |
| Example 3 | UV ink | Ethylene-vinyl alcohol-based copolymer film/ Adhesive layer/Base material | Styrene-based elastomer | 7.2 | 0.8 | N.D. | 1.1 | 14.8 |
| Example 4 | Gravure ink | Aluminum foil/Adhesive layer/Base material | Styrene-based elastomer | < 0.03 | < 0.05 | N.D. | 1.1 | 14.8 |
| Example 5 | UV ink | Aluminum foil/Adhesive layer/Base material | Acrylic-based elastomer | < 0.03 | < 0.05 | N.D. | N.D. | 10.2 |
| Example 6 | UV ink | Aluminum foil/Adhesive layer/Base material | Olefin-based elastomer | < 0.03 | < 0.05 | N.D. | N.D. | 2.2 |
| Comparative Example 1 | UV ink | Aluminum foil/Adhesive layer/Base material | PL Thin | < 0.03 | < 0.05 | N.D. | 45.0 | 9.1 |
| Comparative Example 2 | Gravure ink | Aluminum foil/Adhesive layer/Base material | PL Thin | < 0.03 | < 0.05 | N.D. | 46.2 | 9.1 |
| Comparative Example 3 | UV ink | Polyethylene terephthalate film | Styrene-based elastomer | 40.5 | 110 | 6.5 | 1.1 | 14.8 |
| Comparative Example 4 | UV ink | Biaxially-stretched polypropylene film | Styrene-based elastomer | 22.8 | 5300 | 10.0 | 1.1 | 14.8 |
| Comparative Example 5 | UV ink | Polyethylene terephthalate film | PL Thin | 41.2 | 110 | 6.0 | 46.5 | 8.5 |

EP 3 378 913 B1

18

| | Ink constituting printing layer | Configuration of barrier base material (or its substitute) | Material used for formation of pressure sensitive adhesive layer | Water vapor transmission rate $(g \cdot m^{-2} \cdot day^{-1})$ | Oxygen transmission rate $(cc \cdot m^{-2} \cdot day^{-1} \cdot atm^{-1})$ | Amount of migrated components $(mg/100cm^2)$ | | Adhesive strength (N/25mm) |
|---|---|---|---|---|---|---|---|---|
| | | | | | | Derived from printing layer and print-receiving layer | Derived from pressure sensitive adhesive layer | |
| Comparative Example 6 | UV ink | Biaxially-stretched polypropylene film | PL Thin | 22.3 | 5300 | 11.0 | 46.0 | 7.3 |

As apparent from Table 1, both the water vapor transmission rate and the oxygen transmission rate are satisfactory values in the indication labels manufactured in the examples. That is, the indication labels of the examples are excellent in the gas barrier properties to water vapor and oxygen. Moreover, in the indication labels manufactured in the examples, migration of the components to the adherend is not detected in the test of the above Exemplary Test 3.

[Industrial Applicability]

The invention provides the use of an indication label for products that are demanded to avoid contamination: pharmaceutical products or foods.

[Description of Reference Numerals]

1    Pressure sensitive adhesive sheet for indication label
    10 Barrier base material
    11 Base material
    12 Barrier layer
    20 Pressure sensitive adhesive layer
    30 Release sheet

2    Printing layer
100   Indication label
200   Adherend

**Claims**

1. Use of an indication label for pharmaceutical products or foods, wherein the indication label comprises:

    (i) a pressure sensitive adhesive sheet comprising:

        a barrier base material having gas barrier properties to water vapor and oxygen;
        a pressure sensitive adhesive layer laminated on a surface of the barrier base material;
        a print-receiving layer provided on a surface of the barrier base material opposite to the pressure sensitive adhesive layer, and

    (ii) a printing layer laminated on a surface of the pressure sensitive adhesive sheet opposite to the pressure sensitive adhesive layer;

    wherein

        the pressure sensitive adhesive layer comprises an extruded product of a pressure sensitive adhesive composition that contains a thermoplastic elastomer;
        when the barrier base material has a thickness of 50 $\mu$m, the barrier base material has a water vapor transmission rate of 15 g·m$^2$·day$^{-1}$ or less, measured according to Exemplary Test 1 in the description
        when the barrier base material has a thickness of 50 $\mu$m, the barrier base material has an oxygen transmission rate of 10 cc·m$^{-2}$·day$^{-1}$·atm$^{-1}$ or less, measured according to Exemplary Test 2 in the description
        the barrier base material comprises one or more base materials and one or more barrier layers laminated on a surface of the base materials;
        a material which constitutes the one or more base materials is a resin-based material; and
        a material which constitutes the one or more barrier layers is selected from one or more of aluminum, magnesium, zinc and tin.

2. The use of an indication label for pharmaceutical products or foods as recited in claim 1, wherein at least one of the barrier layers is located closer to the pressure sensitive adhesive layer than all of the base materials of the barrier base material.

3.  The use of an indication label for pharmaceutical products or foods as recited in claim 1 or 2, wherein the thermoplastic elastomer is at least one selected from an acrylic-based elastomer, an olefin-based elastomer, and a styrene-based elastomer.

4.  The use of an indication label for pharmaceutical products or foods as recited in any one of claims 1 to 3, wherein a content of the thermoplastic elastomer in the pressure sensitive adhesive composition is 50 mass% or more and 100 mass% or less.

5.  A method of manufacturing a pressure sensitive adhesive sheet for an indication label as defined in any one of claims 1 to 4, the method comprising
    a step of extruding the pressure sensitive adhesive composition to form the pressure sensitive adhesive layer.

**Patentansprüche**

1.  Verwendung eines Indikationsetiketts für pharmazeutische Produkte oder Lebensmittel, wobei das Indikationsetikett umfasst:

    (i) eine Haftklebstofffolie, umfassend:

    ein Barrieregrundmaterial mit Gasbarriereeigenschaften gegenüber Wasserdampf und Sauerstoff;
    eine Haftklebstoffschicht, die auf eine Oberfläche des Barrieregrundmaterials laminiert ist;
    eine Aufdruckempfangsschicht, die auf einer Oberfläche des Barrieregrundmaterials gegenüber der Haftklebstoffschicht bereitgestellt ist, und

    (ii) eine Aufdruckschicht, die auf eine Oberfläche der Haftklebstofffolie gegenüber der Haftklebstoffschicht laminiert ist;

    wobei

    die Haftklebstoffschicht ein extrudiertes Produkt einer Haftklebstoffzusammensetzung umfasst, die ein thermoplastisches Elastomer enthält;
    wenn das Barrieregrundmaterial eine Dicke von 50 $\mu$m aufweist, das Barrieregrundmaterial eine Wasserdampfdurchlässigkeitsrate von 15 g$\cdot$m$^{-2}\cdot$Tag$^{-1}$ oder weniger, gemessen gemäß dem Beispieltest 1 in der Beschreibung, aufweist,
    wenn das Barrieregrundmaterial eine Dicke von 50 $\mu$m aufweist, das Barrieregrundmaterial eine Sauerstoffdurchlässigkeitsrate von 10 cc$\cdot$m$^{-2}\cdot$Tag$^{-1}\cdot$atm$^{-1}$ oder weniger, gemessen gemäß dem Beispieltest 2 in der Beschreibung, aufweist,
    das Barrieregrundmaterial ein oder mehrere Grundmaterialien und eine oder mehrere Barriereschichten umfasst, die auf eine Oberfläche der Grundmaterialien laminiert sind;
    ein Material, das das eine oder die mehreren Grundmaterialien bildet, ein Material auf Harzbasis ist; und
    ein Material, das die eine oder die mehreren Barriereschichten bildet, aus einem oder mehreren von Aluminium, Magnesium, Zink und Zinn ausgewählt ist.

2.  Verwendung eines Indikationsetiketts für pharmazeutische Produkte oder Lebensmittel nach Anspruch 1, wobei sich wenigstens eine der Barriereschichten näher an der Haftklebstoffschicht befindet als alle Grundmaterialien des Barrieregrundmaterials.

3.  Verwendung eines Indikationsetiketts für pharmazeutische Produkte oder Lebensmittel nach Anspruch 1 oder 2, wobei das thermoplastische Elastomer wenigstens eines ist, das aus einem Elastomer auf Acrylbasis, einem Elastomer auf Olefinbasis und einem Elastomer auf Styrolbasis ausgewählt ist.

4.  Verwendung eines Indikationsetiketts für pharmazeutische Produkte oder Lebensmittel nach einem der Ansprüche 1 bis 3, wobei der Gehalt des thermoplastischen Elastomers in der Haftklebstoffzusammensetzung 50 Masse-% oder mehr und 100 Masse-% oder weniger beträgt.

5.  Verfahren zum Herstellen einer Haftklebstoffschicht für ein Indikationsetikett nach einem der Ansprüche 1 bis 4, wobei das Verfahren umfasst:

einen Schritt des Extrudierens der Haftklebstoffzusammensetzung, um die Haftklebstoffschicht auszubilden.

**Revendications**

1. Utilisation d'une étiquette d'indication pour des produits pharmaceutiques ou des aliments, dans laquelle l'étiquette d'indication comprend :

   (i) une feuille adhésive sensible à la pression comprenant :

   un matériau-barrière de base ayant des propriétés barrières aux gaz contre la vapeur d'eau et l'oxygène ;
   une couche adhésive sensible à la pression stratifiée sur une surface du matériau-barrière de base ;
   une couche réceptrice d'impression prévue sur une surface du matériau-barrière de base en face de la couche adhésive sensible à la pression, et

   (ii) une couche d'impression stratifiée sur une surface de la feuille adhésive sensible à la pression en face de la couche adhésive sensible à la pression ;

   dans laquelle

   la couche adhésive sensible à la pression comprend un produit extrudé d'une composition adhésive sensible à la pression qui contient un élastomère thermoplastique ;
   lorsque le matériau-barrière de base a une épaisseur de 50 $\mu$m, le matériau-barrière de base a un taux de transmission de vapeur d'eau de 15 g·m$^{-2}$·jour$^{-1}$ ou moins, mesuré selon l'exemple d'essai 1 dans la description,
   lorsque le matériau-barrière de base a une épaisseur de 50 $\mu$m, le matériau-barrière de base a un taux de transmission d'oxygène de 10 cc·m$^{-2}$jour$^{-1}$·atm$^{-1}$ ou moins, mesuré selon l'exemple d'essai 2 dans la description,
   le matériau-barrière de base comprend un ou plusieurs matériaux de base et une ou plusieurs couches barrières stratifiées sur une surface des matériaux de base ;
   un matériau qui constitue l'un ou les plusieurs matériaux de base est un matériau à base de résine ; et
   un matériau qui constitue l'une ou les plusieurs couches barrières est sélectionné parmi un ou plusieurs de : aluminium, magnésium, zinc et étain.

2. Utilisation d'une étiquette d'indication pour produits pharmaceutiques ou aliments selon la revendication 1, dans laquelle au moins une des couches barrières est située plus près de la couche adhésive sensible à la pression que la totalité des matériaux de base du matériau-barrière de base.

3. Utilisation d'une étiquette d'indication pour produits pharmaceutiques ou aliments selon la revendication 1 ou 2, dans laquelle l'élastomère thermoplastique est au moins un sélectionné parmi un élastomère à base d'acrylique, un élastomère à base d'oléfine, et un élastomère à base de styrène.

4. Utilisation d'une étiquette d'indication pour produits pharmaceutiques ou aliments selon l'une quelconque des revendications précédentes 1 à 3, dans laquelle une teneur en l'élastomère thermoplastique dans la composition adhésive sensible à la pression est de 50 % en masse ou plus et de 100 % en masse ou moins.

5. Procédé de fabrication d'une feuille adhésive sensible à la pression pour une étiquette d'indication telle que définie dans l'une quelconque des revendications précédentes 1 à 4, le procédé comprenant
   une étape de l'extrusion de la composition adhésive sensible à la pression pour former la couche adhésive sensible à la pression.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016141724 A
- EP 2913372 A1
- EP 1780252 A1